# FASCICULE DE BREVET EUROPEEN

(11) **EP 0 642 231 B1**
(45) Date de publication et mention de la délivrance du brevet: **06.03.1996**
(21) Numéro de dépôt: 94470026.9
(22) Date de dépôt: 19.08.1994
(51) Int. Cl.: H04B 3/54, H04L 12/28, H04L 1/12, H04L 1/16, H04L 25/38, H04L 12/413

(54) **Procédé de correction d'un message dans une installation alimentée par le secteur**
Verfahren zur Fehlerkorrektur von Nachrichten in einem netzbetriebenen System
Method for error correction of messages in a mains-powered system

(30) Priorité: 02.09.1993 FR 9310474
(43) Date de publication de la demande: 08.03.1995
(73) Titulaire: SGS-THOMSON MICROELECTRONICS S.A., F-94250 Gentilly (FR)
(72) Inventeur: Le Van Suu, Maurice, F-57000 Metz (FR)
(74) Mandataire: Schmit, Christian Norbert Marie

(56) Documents cités:
- EP-A- 0 254 846
- EP-A- 0 319 270
- EP-A- 0 520 877
- US-A- 4 479 215
- US-A- 4 589 111
- IEEE TRANSACTIONS ON POWER DELIVERY, vol.8, no.3, Juillet 1993, NEW YORK US pages 818 - 826, XP403075 J. O. ONUNGA / R. W. DONALDSON: 'A simple packet retransmission strategy for throughput and delay enhancement on power line communication channels.'

## Description

La présente invention concerne un procédé de correction d'un message à transmettre entre un appareil émetteur et un appareil récepteur répartis sur une ligne de transmission d'information d'une installation alimentée par le secteur.

L'invention trouve une application particulièrement avantageuse, mais non exclusive, dans le domaine de la gestion de réseaux de domotique informatisés.

Les réseaux domotiques informatisés comprennent en général une pluralité d'appareils répartis sur une ligne de transmission d'information. Ces appareils peuvent être des appareils domestiques proprement dits, tels que téléviseur, réfrigérateur, machine à laver, radiateur, etc., ou encore une ou plusieurs stations de contrôle destinées à recevoir des instructions ou des informations relatives au fonctionnement des autres appareils. Ces instructions sont par exemple des ordres d'arrêt ou de marche provenant d'un utilisateur ou des appareils eux-mêmes. A leur tour, la ou les stations de contrôle adressent aux autres appareils de l'installation des ordres de commande sous la forme d'un message permettant notamment d'obtenir les modifications de fonctionnement désirées.

Pour adresser ces ordres de commande, on utilise de façon usuelle divers types de support pour la ligne de transmission d'information, comme le courant porteur, les câbles coaxiaux, les paires torsadées, le rayonnement infrarouge et les radiofréquences par voie herzienne, de même que les fibres optiques, les ultrasons,etc. Bien que d'application très générale, l'invention concerne plus spécialement le courant porteur, support de choix pour les installations domestiques. L'installation envisagée ici peut être du type à intelligence centralisée, avec une station de contrôle échangeant des messages avec d'autres appareils jouant le rôle de stations esclaves. Dans une installation à intelligence répartie, chaque appareil peut jouer par autoprogrammation le rôle de maître ou d'esclave sans passer par une station de contrôle, qui, elle, ne fait qu'écouter les messages.

Les appareils destinés à être intégrés dans une installation de domotique sont, jusqu'à présent, prévus par les constructeurs pour travailler dans une configuration de réception donnée définie par une vitesse de transmission de message de commande qui dépend du type de l'appareil concerné. C'est ainsi que les appareils de chauffage peuvent fonctionner avec une vitesse relativement lente de 300 bauds, cette vitesse étant cependant nettement insuffisante pour les appareils d'éclairage qui exigent une vitesse de transmission sensiblement plus grande d'au moins 2400 bauds.

De manière à permettre à ces divers appareils de coexister sur un même support de transmission d'information, un mouvement d'harmonisation s'est amorcé en 1991 visant à imposer une vitesse unique de transmission de 1200 bauds.

Cependant, il faut prévoir que, dans un avenir relativement proche, des appareils fonctionnant à une vitesse de transmission d'information supérieure, 2400 bauds par exemple, devront être raccordés sur des installations répondant au standard actuel.

C'est pourquoi, de manière à obtenir une compatibilité la plus complète, la tendance est de développer des appareils pouvant émettre et recevoir des messages à au moins deux vitesses de transmission d'information. Un système de transmission de données dans une installation de ce type comprenant de tels appareils est décrit dans la demande de brevet européen n° 93401231.1.

L'article de J. Onunga et R. Donaldson "A simple packet retransmission strategy for throughput and delay enhancement on power line communication channels", IEEE Transactions on Power Delivery, vol.8, no.3, Juillet 1993, pages 818 - 826 décrit un procédé de correction de messages dans un réseau domotique informatisé.

Par ailleurs, les lignes de transmission d'information utilisées en domotique peuvent être le siège de nombreuses perturbations susceptibles d'affecter la transmission des messages circulant le long des lignes. Ces perturbations sont de deux types, à savoir, d'une part, des parasites impulsifs récursifs, produits par des appareils comme les moteurs, les tubes luminescents à décharge, et les fours à induction, et, d'autre part, les variations de l'impédance linéique de l'installation, d'origine résistives, capacitives ou inductives, conduisant à une atténuation de l'amplitude des bits au cours de leur propagation entre un appareil émetteur et un appareil récepteur relativement éloignés l'un de l'autre sur la ligne de transmission. Dans les deux cas, l'appareil récepteur est dans l'impossibilité de comprendre les messages qui lui sont adressés, soit parce que les bits qui les composent sont déformés par les parasites, soit parce qu'ils arrivent avec une amplitude trop faible.

Aussi, le problème technique à résoudre par l'objet de la présente invention est de proposer un procédé de correction d'un message à transmettre entre un appareil émetteur et un appareil récepteur répartis sur une ligne de transmission d'information d'une installation alimentée par le secteur, ladite ligne étant le siège de perturbations susceptibles d'affecter la transmission dudit message, et chaque appareil étant apte à émettre et recevoir des données à au moins deux vitesses de transmission, procédé de correction qui permettrait à l'appareil récepteur de recevoir et de déchiffrer le message émis par l'appareil émetteur malgré des conditions de transmission dégradées par les perturbations de la ligne.

Une première solution au problème technique posé consiste, selon la présente invention, en ce que ledit procédé de correction comporte les étapes suivantes:
a) émission par l'appareil émetteur, à une première vitesse de transmission, du message à transmettre avec demande d'acquittement de l'appareil récepteur,
b) en l'absence d'acquittement du fait desdites perturbations,émission par l'appareil émetteur, à une autre vitesse de transmission, d'un message de correction synchrone avec la fréquence du secteur, avecdemande d'acquittement obligatoire de l'appareil récepteur, et contenant des informations et un algorithme de correction établi par l'appareil émetteur par comparaison entre les bits émis et les bits effectivement transmis sur la ligne, puis, l'algorithme de correction étant égal à l'algorithme identité,
c) en présence d'acquittement du message de correction, émission par l'appareil émetteur, à ladite autre vitesse de transmission, du message à transmettre avec demande d'acquittement de l'appareil récepteur,
d) en l'absence d'acquittement du message de correction, émission par l'appareil émetteur, à encore une autre configuration de transmission, du message à transmettre avec demande d'acquittement de l'appareil récepteur.

Ce mode de réalisation correspond au cas où les perturbations de la ligne de transmission sont constituées par une atténuation linéique qui affaiblit l'amplitude des bits du message à transmettre au point de ne plus les rendre détectables par l'appareil récepteur. Dans ce cas, les séquences de bits effectivement transmises sont identiques aux séquences émises par l'appareil émetteur, de sorte que l'algorithme de correction est égal à l'algorithme identité.

Par contre, lorsque le message à transmettre n'est pas reçu par l'appareil récepteur du fait des parasites impulsifs récursifs qui viennent déformer certains bits individuellement rendant ainsi le message incompréhensible pour l'appareil récepteur, l'algorithme de correction ne peut être égal à l'algorithme identité puisqu'il comporte nécessairement au moins un bit erroné.

Bien entendu, à l'inverse, un algorithme de correction différent de l'algorithme d'identité indique la présence de parasites, seuls ou combinés à une atténuation linéique.

Dans le procédé de l'invention, la structure de l'algorithme de correction est donc un moyen permettant de connaître l'origine des perturbations et d'apporter au message la correction appropriée.

Dans le cas de parasites impulsifs récursifs, combinés ou non à une atténuation de la ligne, il est prévu, selon une deuxième solution au problème technique posé, que ledit procédé comporte les étapes suivantes :
a) émission par l'appareil émetteur, à une première vitesse de transmission, du message à transmettre avec demande d'acquittement de l'appareil récepteur,
b) en l'absence d'acquittement du fait desdites perturbations, émission par l'appareil émetteur, à une autre vitesse de transmission, d'un message de correction synchrone avec la fréquence du secteur, avec demande d'acquittement obligatoire de l'appareil récepteur et contenant des informations et un algorithme de correction établi par l'appareil émetteur par comparaison entre les bits émis et les bits effectivement transmis sur la ligne, puis, l'algorithme de correction étant différent de l'algorithme identité,
c) en présence d'acquittement du message de correction, émission par l'appareil émetteur, à ladite autre vitesse de transmission, du message à transmettre, synchrone avec la fréquence du secteur avec demande d'acquittement de l'appareil récepteur,
d) en l'absence d'acquittement du message de correction, réémission par l'appareil émetteur, à encore une autre vitesse de transmission, d'un message de correction synchrone avec la fréquence du secteur, avec demande d'acquittement obligatoire de l'appareil récepteur et contenant d'autres informations et un autre algorithme de correction établi par l'appareil émetteur par comparaison entre les bits émis et les bits effectivement transmis sur la ligne, puis, si ledit autre algorithme de correction est différent de l'algorithme identité, reprise du procédé après l'étape b), ou, si ledit autre algorithme de correction est égal à l'algorithme identité, reprise du procédé après l'étape b) du procédé précité correspondant à l'atténuation linéique de la ligne de transmission.
En général, toujours dans l'hypothèse de perturbations liées à des parasites impulsifs, le changement de la vitesse de transmission, qui peut être aussi bien le passage à une vitesse inférieure que supérieure, sera suffisant pour permettre à l'appareil récepteur de déchiffrer le message qui lui est adresséou de déceler une atténuation linéique, auquel cas on utilise le procédé de correction correspondant précédemment décrit. D'ailleurs, l'acquittement délivré par l'appareil récepteur en réponse au message de correction émis indique une réception correcte de ce message.

Cependant, afin d'éviter qu'un parasite imprévu ne vienne accidentellement perturber la ligne lors de l'émission du message à transmettre, l'invention prévoit qu'en cas de doute sur au moins un bit reçu, l'appareil récepteur effectue une opération de correction à l'aide de l'algorithme de correction du message de correction précédemment reçu et acquitté.

Dans tous les cas, ladite étape d) est répétée jusqu'à réception par l'appareil émetteur de l'acquittement demandé ou jusqu'à épuisement d'un compteur de répétitions.

Le fonctionnement général du procédé de correction conforme à l'invention, qui sera décrit en détail plus loin, est le suivant.

L'appareil émetteur envoie d'abord, à une première vitesse de transmission le message à transmettre en direction de l'appareil récepteur. Si les perturbations de la ligne sont telles que l'appareil récepteur ne peut recevoir ou comprendre le message émis, l'acquittement demandé n'est pas envoyé à l'appareil émetteur, lequel détecte alors qu'une anomalie s'est produite sur la ligne.
Afin de pouvoir néanmoins transmettre le message malgré des conditions de fonctionnement dégradées de la ligne, l'appareil émetteur formule un message de correction raccourci (c'est-à-dire plus court que le message à transmettre) qu'il émet de manière synchrone avec la fréquence du secteur et à une autre vitesse de transmission permettant d'atténuer l'effet des perturbations.

D'autre part, le message de correction inclut notamment un algorithme de correction établi par l'appareil émetteur par comparaison entre les bits connus qu'il émet et les bits effectivement transmis qu'il écoute sur la ligne. On verra plus loin comment est construit cet algorithme de correction. On retiendra seulement que l'appareil émetteur est apte à distinguer un algorithme égal à l'algorithme identité, significatif d'une atténuation sur la ligne, d'un algorithme différent de l'algorithme identité, significatif d'une perturbation par parasites, éventuellement combinée à une atténuation linéique.

Le message de correction comprend également une demande d'acquittement qui permet à l'appareil émetteur de savoir s'il a bien été reçu par l'appareil récepteur. Dans le cas contraire, l'appareil émetteur envoie un nouveau message de correction à encore une autre vitesse de transmission. Si la perturbation est d'origine parasitaire et s'il peut recevoir le message de correction, l'appareil récepteur détecte d'abord le synchronisme avec la fréquence-secteur qui est un indice du caractère correctif du message reçu et émet l'acquittement demandé. L'algorithme de correction est stocké en mémoire de l'appareil récepteur, ainsi que sa synchronisation avec le secteur. Le synchronisme avec la fréquence secteur introduit ainsi une notion de redondance du caractère correctif, l'avantage de ce synchronisme étant principalement qu'il peut être détecté antérieurement à la réception complète du message de correction.

L'appareil récepteur est alors en mesure de recevoir le message à transmettre, émis synchrone avec le secteur, par l'appareil émetteur. Il peut de plus à tout moment corriger des bits erronés à l'aide de l'algorithme de correction.

Si la perturbation est une atténuation le long de la ligne de transmission, révélée par un algorithme identité, éventuellement après correction des parasites, l'appareil émetteur envoie le message à transmettre à la même vitesse de transmission que celle à laquelle a été émis le message de correction acquitté.

Dans le cas où l'acquittement n'a pas été reçu, l'appareil émetteur réémet le message à transmettre à encore une autre configuration de transmission.

On entendra ici par configuration de transmission l'ensemble constitué par la vitesse de transmission ou le gain de l'appareil émetteur car, dans l'hypothèse d'une atténuation de ligne, la transmission peut être rétablie aussi bien par une variation de vitesse de transmission que par une variation de gain.

Cette dernière opération est répétée autant de fois que nécessaire, c'est-à-dire tant qu'un acquittement n'a pas été fourni par l'appareil récepteur.

On peut aussi prévoir un compteur de répétitions qui limite le nombre de répétitions au-delà d'un certain nombre, afin d'éviter que le message arrivant trop tard à l'appareil récepteur ne devienne inutile.

Bien entendu, le procédé de correction, objet de l'invention, ne peut être mis en oeuvre que si les appareils émetteur et récepteur sont capables d'émettre et de recevoir plusieurs vitesses de transmission et de reconnaître la vitesse reçue.

La description qui va suivre en regard des dessins annexés, donnés à titre d'exemples non limitatifs, fera bien comprendre en quoi consiste l'invention et comment elle peut être réalisée.

La figure 1 est un schéma représentant une installation comprenant un appareil émetteur et un appareil récepteur répartis sur une ligne de courant porteur.

La figure 2 est un schéma des appareils émetteur et récepteur de la figure 1.

La figure 3 donne la composition typique d'un message à transmettre entre l'appareil émetteur et l'appareil récepteur de la figure 1.

La figure 4 est un schéma illustrant la composition du message de correction émis par l'appareil émetteur de la figure 1.

La figure 5 donne le schéma du détecteur de passages par zéro du schéma de la figure 2.

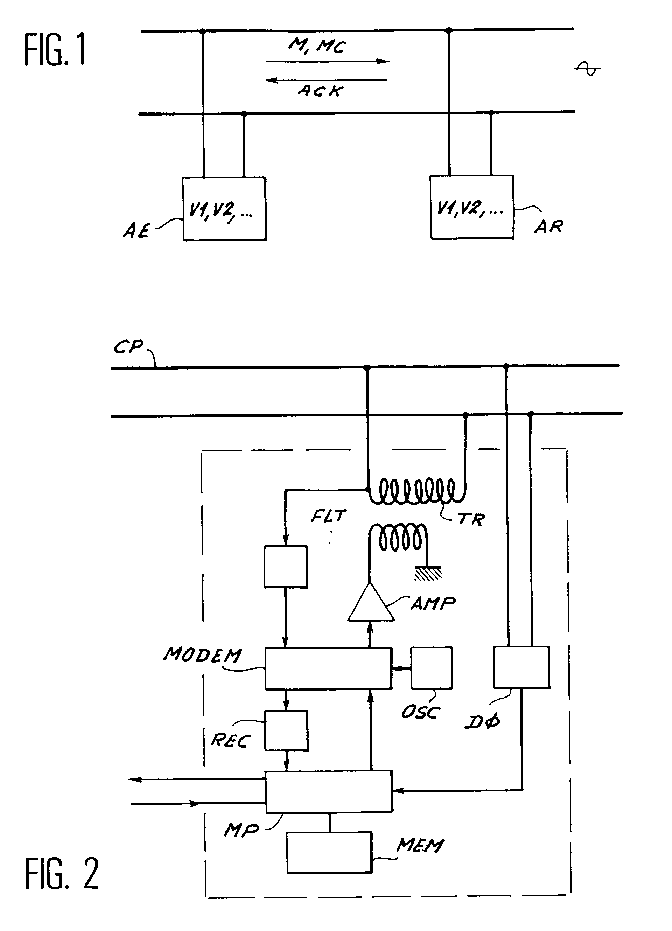

La figure 1 montre de manière schématique une ligne CP de transmission d'information d'une installation alimentée par le secteur. Le long de cette ligne sont répartis un appareil émetteur AE et un appareil récepteur AR aptes à émettre et recevoir des données à au moins deux vitesses V1, V2 de transmission, l'appareil émetteur AE devant transmettre à l'appareil récepteur AR un message M malgré la présence de perturbations dont est le siège la ligne CP de transmission.

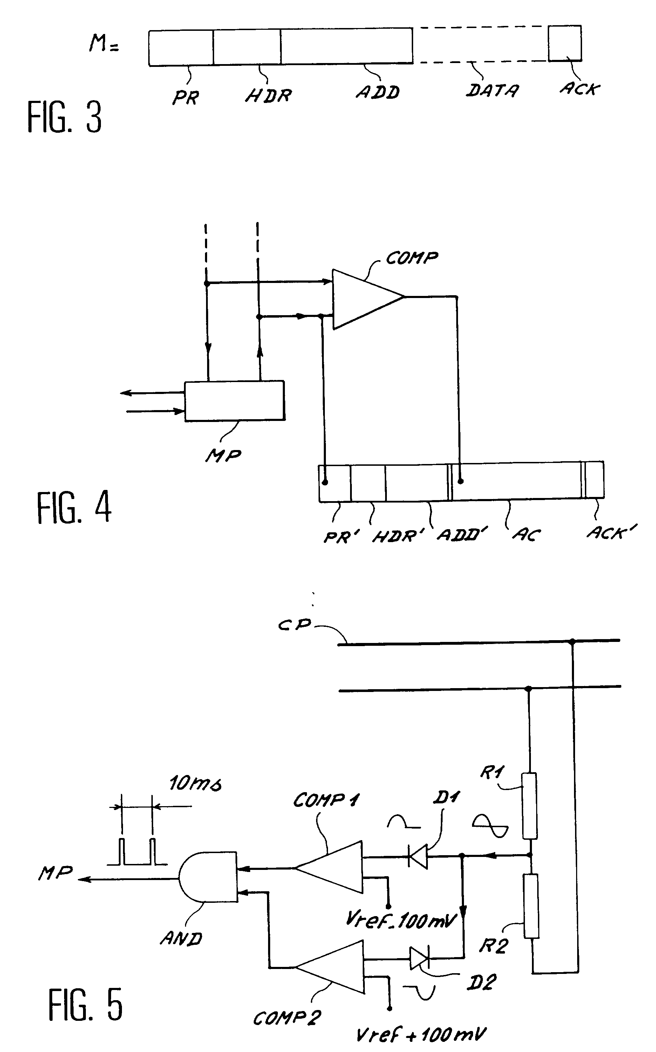

Le message M à transmettre présente la structure générale montrée sur la figure 3, avec notamment un préambule PR, un en-tête HDR, une zone ADD d'adresses comportant l'adresse de l'appareil émetteur du message et celle de l'appareil récepteur destinataire, une zone DATA de données, et une zone ACK d'acquittement dans laquelle l'appareil émetteur du message M indique s'il désire ou non recevoir un message d'acquittement en réponse au message M émis.

Comme cela a été indiqué plus haut, les perturbations de la ligne CP de transmission susceptibles d'affecter le message M à transmettre sont, d'une part, les parasites impulsifs récursifs qui interfèrent avec certains bits du message et en modifient l'amplitude au point de rendre le message M incompréhensible pour l'appareil récepteur AR, et, d'autre part, l'atténuation linéique de la ligne CP entre deux appareils éloignés qui réduit le niveau de l'ensemble des bits du message à une valeur inférieure au seuil de détection de l'appareil récepteur AR.

Quelle que soit l'origine des perturbations de la ligne CP de transmission, le procédé de correction conforme à l'invention débute par une première étape d'émission par l'appareil émetteur AE, à une première vitesse V1 de transmission, du message M à transmettre avec demande d'acquittement ACK par l'appareil récepteur AR.

Si l'acquittement ACK parvient en retour à l'appareil émetteur AE, le message M a été correctement reçu par l'appareil récepteur AR, soit parce que les perturbations sont inexistantes, soit parce que leur intensité est trop faible pour rendre le message M indéchiffrable.

Dans le cas contraire où l'acquittement ACK n'est par reçu par l'appareil émetteur AE à cause d'une mauvaise réception du message M par l'appareil récepteur AR due aux perturbations, l'appareil émetteur AE envoie à une autre vitesse V2 de transmission un message MC de correction, synchrone avec la fréquence secteur, avec demande d'acquittement obligatoire ACK' de l'appareil récepteur AR, et contenant des informations et un algorithme AC- de correction établi par l'appareil émetteur AE par comparaison entre les bits émis et les bits effectivement transmis sur la ligne CP.

Pour effectuer ces opérations, l'appareil émetteur AE est constitué comme le représente la figure 2.

L'appareil comprend un circuit à microprocesseur MP muni de ses mémoires de travail et de programme MEM, afin d'émettre des messages de commande et de recevoir et traiter les messages reçus. Ce circuit comporte ses propres programmes de fonctionnement qui peuvent être contrôlés par l'utilisateur par l'intermédiaire d'une console comprenant un clavier de commande et un écran de contrôle. On peut aussi prévoir que le circuit à microprocesseur MP est contrôlé par un microordinateur personnel, l'utilisateur pouvant alors définir à volonté des programmes de fonctionnement du circuit.

Outre le microprocesseur MP, le circuit comporte les moyens nécessaires pour établir les messages à transmettre sur la ligne CP du courant porteur. Ces moyens comportent de préférence un oscillateur OSC pour établir une fréquence porteuse. La sortie de l'oscillateur est appliquée, à travers un modulateur/démodulateur MODEM, à un amplificateur AMP, et la sortie de l'amplificateur AMP est appliquée au primaire d'un transformateur TR dont le secondaire est connecté à la ligne CP de distribution électrique du courant porteur.

Les informations qui viennent de la ligne CP arrivent par le transformateur TR, et sont transmises à une cellule de filtrage FLT permettant de détecter la présence d'une modulation sur le réseau. La sortie de la cellule de filtrage est reliée au MODEM et mise en forme. La sortie de ce circuit est reliée au microprocesseur MP. Les messages reçus du réseau des autres appareils de l'installation sont démodulés et transformés en successions d'impulsions binaires qui sont exploitables par le microprocesseur MP.

Entre le modulateur/démodulateur MODEM et le microprocesseur MP, est intercalé un circuit REC de reconnaissance de la vitesse de transmission des messages reçus. Ce circuit, indispensable pour des appareils fonctionnant à plusieurs vitesses de transmission, est décrit en détail dans la demande de brevet européen N° 93 401231.1.

De manière à pouvoir émettre les bits des messages, notamment le message MC de correction, en synchronisme avec la fréquence du secteur, le circuit de la figure 2 comprend un détecteur D0 de passages par zéro du courant-secteur. Ce détecteur est décrit sur la figure 5. Une fraction de la tension-secteur est prélevée par un pont de résistances R1/R2, puis redressée pour l'alternance positive par la diode D1, et pour l'alternance négative par la diode D2. Chaque composante ainsi obtenue est comparée respectivement à une tension VRef-100 mV et une tension VRef + 100 mV, par exemple, par des comparateurs COMP1 et COMP2 dont les sorties sont appliquées aux bornes d'entrée d'une porte ET AND. On obtient alors en sortie des impulsions synchrones avec la fréquence du secteur, à la période de 10 ms pour une fréquence de 50 Hz par exemple. La tension VRef est égale à - la tension secteur multipliée par le facteur R2/(R1+R2).

Bien entendu, l'appareil récepteur AR a une constitution équivalente à celle qui vient d'être décrite en référence à l'appareil émetteur AE.

La composition du message MC de correction ainsi que son mécanisme de formation sont expliqués sur la figure 4. Comme le message M à transmettre, le message MC de correction présente un préambule PR', un en-tête HDR', une zone ADD' d'adresses comportant l'adresse de l'appareil émetteur du message et celle de l'appareil récepteur destinataire. Ces trois zones peuvent s'étendre par exemple sur 64 bits. Puis, suit une zone correspondant à l'algorithme AC de correction proprement dit, constitué pour chacun des 64 premiers bits d'un bit de correction de 1 si le bit effectivement transmis sur la ligne CP est identique au bit émis par le microprocesseur MP, et de 0 si ces deux bits diffèrent à cause des perturbations. Le bit de correction est fourni par un comparateur COMP dont les bornes d'entrée sont reliées aux voies d'émission et de réception du circuit de la figure 2. L'algorithme AC de correction a donc la même longueur que les trois premières zones du message. Enfin, le message MC de correction se termine par une zone ACK' d'acquittement.

L'algorithme de correction peut également être constitué par le code correcteur dit de Hamming qui est basé sur la distance entre deux bits correspondant au taux de confiance que l'on accorde à la transmission.

Avec l'algorithme AC de correction, on dispose d'un moyen pour déterminer l'origine des perturbations affectant la transmission des messages. En effet, si l'algorithme AC de correction n' est constitué que de bits 1, tous les bits émis sur la ligne sont correctement transmis, il ne s'agit donc pas de parasites impulsifs mais d'une simple atténuation de la ligne. Par contre, la présence de bits de correction égaux à 0 est significative de parasites impulsifs sur la ligne CP, seuls ou combinés à une atténuation linéique.

Cette possibilité d'identifier la nature des perturbations permet alors de définir le mode de correction le mieux adapté.

Dans un premier cas où les perturbations incluent des parasites impulsifs récursifs, l'algorithme AC de correction étant différent de l'algorithme d'identité, l'appareil émetteur AE, après avoir reçu l'acquittement ACK' du message MC de correction, émet à l'autre vitesse V2 de transmission le message M à transmettre, synchrone avec la fréquence du secteur, avec demande d'acquittement ACK de l'appareil récepteur AR.

Ladite autre vitesse V2 de transmission est choisie de façon à améliorer la qualité de la transmission en minimisant les effets des parasites. Si la fréquence de récurrence des parasites n'est pas trop élevée, la vitesse V2 sera en général inférieure à la première vitesse V1 de transmission. Par contre, si la fréquence du parasites est grande, on aura avantage à augmenter la vitesse V2 de manière à pouvoir faire passer les bits des messages entre les parasites.

Le plus souvent, le changement de vitesse de transmission, éventuellement répétée, sera suffisante pour permettre une lecture correcte, et du message MC de correction et du message M à transmettre. Toutefois, à titre de sécurité, il est prévu qu'en cas de doute sur un bit du message M à transmettre, l'appareil récepteur AR effectue une opération de correction à l'aide de l'algorithme AC de correction qu'il a précédemment reçu et acquitté. Dans cette opération, la synchronisation avec la fréquence-secteur joue un rôle fondamental puisque c'est elle qui aura permis de reconnaître le message MC de correction, avec confirmation par un entête HDR' spécifique au caractère correctif du message, et de stocker en mémoire à la fois l'algorithme AC de correction et son synchronisme avec la fréquence-secteur. De plus, la synchronisation du message M à transmettre permet également d'appliquer correctement l'algorithme AC de correction en repérant dans la séquence le bit de correction correspondant au bit à corriger.

Naturellement, si l'appareil émetteur AE ne reçoit pas d'acquittement ACK' du message MC de correction, le procédé est poursuivi par l'envoi d'un nouveau message de correction à une nouvelle vitesse de transmission. Si l'algorithme de correction de ce nouveau message de correction est encore différent de l'algorithme identité, le procédé ci-dessus est repris. Par contre, si le nouvel algorithme de correction est l'algorithme identité, on est en présence d'une atténuation de ligne qui était combinée aux parasites dont les effets sont alors éliminés.

Dans ce cas, et également lorsque les perturbations sont une simple atténuation le long de la ligne CP de transmission, l'algorithme AC de correction étant égal à l'algorithme identité, l'appareil émetteur AE, après avoir reçu l'acquittement ACK' du message MC de correction, émet à l'autre vitesse V2 de transmission le message M à transmettre, avec demande d'acquittement ACK de l'appareil récepteur AR.

En l'absence d'acquittement ACK' du message MC de correction, l'appareil émetteur AE émet, à encore une autre configuration de transmission, le message M à transmettre avec demande d'acquittement ACK de l'appareil récepteur AE. Cette autre configuration de transmission est définie, soit par une troisième vitesse V3 de transmission, soit par une nouvelle valeur du gain G de l'amplificateur AMP muni d'un contrôle automatique de gain.

Cette dernière opération est répétée autant de fois que nécessaire jusqu'à obtenir l'acquittement ACK demandé ou jusqu'à épuisement d'un compteur de répétitions présent dans le message M émis par l'appareil émetteur AE.

## Revendications

1. Procédé de correction d'un message (M) à transmettre entre un appareil émetteur (AE) et un appareil récepteur (AR) répartis sur une ligne (CP) de transmission d'information d'une installation alimentée par le secteur, ladite ligne étant le siège de perturbations susceptibles d'affecter la transmission dudit message, et chaque appareil (AE, AR) étant apte à émettre et recevoir des données à au moins deux vitesses (V1, V2) de transmission, ledit procédé de correction comportant les étapes suivantes :
a) émission par l'appareil émetteur (AE), à une première vitesse (V1) de transmission, du message (M) à transmettre avec demande d'acquittement (ACK) de l'appareil récepteur (AR),
b) en l'absence d'acquittement (ACK) du fait desdites perturbations, émission par l'appareil émetteur (AE), à une autre vitesse (V2) de transmission, d'un message (MC) de correction synchrone avec la fréquence du secteur, avec demande d'acquittement (ACK') obligatoire de l'appareil récepteur (AR), et contenant des informations et un algorithme (AC) de correction établi par l'appareil émetteur (AE) par comparaison entre les bits émis et les bits effectivement transmis sur la ligne (CP), puis, l'algorithme (AC) de correction étant égal à l'algorithme identité,
c) en présence d'acquittement (ACK') du message (MC) de correction, émission par l'appareil émetteur (AE), à ladite autre vitesse (V2) de transmission, du message (M) à transmettre avec demande d'acquittement (ACK) de l'appareil récepteur (AR),
d) en l'absence d'acquittement (ACK') du message (MC) de correction, émission par l'appareil émetteur (AE), à encore une autre configuration (V3 ; G) de transmission, du message (M) à transmettre avec demande d'acquittement (ACK) de l'appareil récepteur (AR).

2. Procédé de correction d'un message (M) à transmettre entre un appareil émetteur (AE) et un appareil récepteur (AR) répartis sur une ligne (CP) de transmission d'information d'une installation alimentée par le secteur, ladite ligne étant le siège de perturbations susceptibles d'affecter la transmission dudit message, et chaque appareil (AE, AR) étant apte à émettre et recevoir des donnée à au moins deux vitesses (V1, V2) de transmission, ledit procédé de correction comportant les étapes suivantes :
a) émission par l'appareil émetteur (AE), à une première vitesse (V1) de transmission, du message (M) à transmettre avec demande d'acquittement (ACK) de l'appareil récepteur (AR),
b) en l'absence d'acquittement (ACK) du fait desdites perturbations, émission par l'appareil émetteur (AE), à une autre vitesse (V2) de transmission, d'un message (MC) de correction synchrone avec la fréquence du secteur, avec demande d'acquittement (ACK') obligatoire de l'appareil récepteur (AR) et contenant des informations et un algorithme (AC) de correction établi par l'appareil émetteur (AE) par comparaison entre les bits émis et les bits effectivement transmis sur la ligne (CP) , puis, l'algorithme (AC) de correction étant différent de l'algorithme identité,
c) en présence d'acquittement (ACK') du message (MC) de correction, émission par l'appareil émetteur (AE), à ladite autre vitesse (V2) de transmission, du message (M) à transmettre, synchrone avec la fréquence du secteur avec demande d'acquittement (ACK) de l'appareil récepteur (AR),
d) en l'absence d'acquittement (ACK') du message (MC) de correction, réémission par l'appareil émetteur, à encore une autre vitesse (V3) de transmission, d'un message de correction synchrone avec la fréquence du secteur, avec demande d'acquittement obligatoire de l'appareil récepteur (AR), et contenant d'autres informations et un autre algorithme de correction établi par l'appareil émetteur (AE) par comparaison entre les bits émis et les bits effectivement transmis sur la ligne (CP), puis, si ledit autre algorithme de correction est différent de l'algorithme identité, reprise du procédé après l'étape b), ou, si ledit autre algorithme de correction est égal à l'algorithme identité, reprise du procédé après l'étape b) du procédé selon la revendication 1.

3. Procédé de correction selon la revendication 2, caractérisé en ce que, en cas de doute sur au moins un bit reçu du message (M) à transmettre, l'appareil récepteur (AR) effectue une opération de correction à l'aide de l'algorithme (AC) de correction du message de correction précédemment reçu et acquitté.

4. Procédé de correction selon l'une quelconque des revendications 1 à 3, caractérisé en ce que ladite étape d) est répétée jusqu'à réception par l'appareil émetteur (AE) de l'acquittement (ACK) demandé ou jusqu'à épuisement d'un compteur de répétitions.

## Patentansprüche

1. Verfahren zum Korrigieren einer Meldung (M), die zwischen einem Sender (AE) und einem Empfänger (AR) übertragen werden soll, die an einer Informationsübertragungsstrecke (CP) einer durch das Stromnetz versorgten Anlage angeordnet sind, wobei auf der Strecke Störungen auftreten, die die Übertragung der Meldung beeinträchtigen können, und Sender (AE) und Empfänger (AR) eingerichtet sind, um Daten mit wenigstens zwei Übertragungsgeschwindigkeiten (V1, V2) zu senden und zu empfangen, mit folgenden Schritten:
a) Aussenden der zu übertragenden Meldung (M), einschließlich einer Bestätigungsanforderung (ACK) vom Empfänger (AR), durch den Sender (AE) mit einer ersten Übertragungsgeschwindigkeit (V1),
b) bei Fehlen einer Bestätigung (ACK) aufgrund der Störungen, Aussenden einer zur Netzfrequenz synchronen Korrekturmeldung (MC) einschließlich obligatorischer Bestätigungsanforderung (ACK') vom Empfänger (AR) durch den Sender (AE) mit einer anderen Übertragungsgeschwindigkeit (V2), wobei die Meldung Informationen und einen Korrekturalgorithmus (AC) enthält, der vom Sender (AE) durch Vergleich zwischen den gesendeten und den tatsächlich auf der Strecke (CP) übertragenen Bits aufgestellt wird, und, wenn der Korrekturalgorithmus (AC) gleich dem Einheitsalgorithmus ist,
c) bei Vorhandensein einer Bestätigung (ACK') für die Korrekturmeldung (MC) Aussenden der zu übertragenden Meldung (M) einschließlich einer Bestätigungsanforderung (ACK) vom Empfänger (AR) mit der anderen Übertragungsgeschwindigkeit (V2) durch den Sender (AE),
d) bei Fehlen einer Bestätigung (ACK') für die Korrekturmeldung (MC) Aussenden der zu übertragenden Meldung (M) einschließlich einer Bestätigungsanforderung (ACK) vom Empfänger (AR) in einer weiteren Konfiguration (V3; G) durch den Sender (AE).

2. Verfahren zum Korrigieren einer Meldung (M), die zwischen einem Sender (AE) und einem Empfänger (AR) übertragen werden soll, die an einer Informations übertragungsstrecke (CP) einer durch das Stromnetz versorgten Anlage angeordnet sind, wobei auf der Strecke Störungen auftreten, die die Übertragung der Meldung beeinträchtigen können, und Sender (AE) und Empfänger (AR) eingerichtet sind, um Daten mit wenig stens zwei Übertragunsgeschwindigkeiten (V1, V2) zu senden und zu empfangen, mit folgenden Schritten:
a) Aussenden der zu übertragenden Meldung (M), einschließlich einer Bestätigungsanforderung (ACK) vom Empfänger (AR), durch den Sender (AE) mit einer er sten Übertragungsgeschwindigkeit (V1),
b) bei Fehlen einer Bestätigung (ACK) aufgrund der Störungen, Aussenden einer zur Netzfrequenz synchronen Korrekturmeldung (MC) einschließlich obligatorischer Bestätigungsanforderung (ACK') vom Empfänger (AR) durch den Sender (AE) mit einer anderen Übertragungsgeschwindigkeit (V2), wobei die Meldung Informationen und einen Korrekturalgorithmus (AC) enthält, der vom Sender (AE) durch Vergleich zwischen den gesendeten und den tatsächlich auf der Strecke (CP) übertragenen Daten aufgestellt wird, und, wenn der Korrekturalgorithmus ungleich dem Identitätsalgorithmus ist,
c) bei Vorhandensein einer Bestätigung (ACK) für die Korrekturmeldung (MC) Aussenden der zu übertra genden Meldung (M) einschließlich einer Bestätigungsanforderung (ACK) vom Empfänger (AR) mit der anderen Übertragungsgeschwindigkeit (V2) synchron zur, Netzfrequenz durch den Sender (AE),
d) bei Fehlen einer Bestätigung (ACK') für die Korrekturmeldung (MC) erneutes Aussenden einer zur Netzfrequenz synchronen Korrekturmeldung einschließlich einer obligatorischen Bestätigungsanforderung vom Empfänger (AR), die andere Informationen und einen anderen vom Sender (AE) durch Vergleich zwischen den gesendeten und den tatsächlich übertragenen Bits aufgestellten Korrekturalgorithmus umfaßt, mit noch einer anderen Übertragungsgeschwindigkeit (V3) durch den Sender (AE), und,
wenn der andere Korrekturalgorithmus sich vom Identitätsalgorithmus unterscheidet, Fortsetzen des Verfahrens nach dem Schritt b), oder wenn der andere Korrekturalgorithmus gleich dem Identitätsalgorithmus ist, Fortsetzen des Verfahrens nach dem Schritt b) des Verfahrens nach Anspruch 1.

3. Korrekturverfahren nach Anspruch 2, dadurch gekennzeichnet, daß im Falle eines Zweifels über wenigstens ein empfangenes Bit aus der zu übertragenden Meldung (M) der Empfänger (AR) eine Korrekturoperation mit Hilfe des vorher empfangenen und bestätigten Korrekturalgorithmus (AC) durchführt.

4. Korrekturverfahren nach einem der Ansprüche 1 bis 3, dadurch gekennzeichnet, daß der Schritt d) wiederholt wird, bis der Sender (AE) die verlangte Bestätigung (ACK) empfängt oder ein Wiederholungszähler abgelaufen ist.

## Claims

1. Process for correcting a message (M) to be transmitted between a sending apparatus (AE) and a receiving apparatus (AR) spaced out on a data transmission line (CP) of a mainspowered installation, the said line being the origin of perturbations liable to affect the transmission of the said message, and each apparatus (AE, AR) being able to send and receive data at at least two transmission speeds (V1, V2), the said correction process including the following steps:
a) the sending by the sending apparatus (AE), at a first transmission speed (V1), of the message (M) to be transmitted with a request for acknowledgement (ACK) from the receiving apparatus (AR),
b) in the absence of an acknowledgement (ACK) because of the said perturbations, the sending by the sending apparatus (AE), at another transmission speed (V2), of a correction message (MC) synchronous with the mains frequency, with a request for obligatory acknowledgement (ACK') from the receiving apparatus (AR), and containing data and a correction algorithm (AC) prepared by the sending apparatus (AE) by comparison between the bits sent and the bits actually transmitted over the line (CP), and then, the correction algorithm (AC) being equal to the identity algorithm,
c) when there is an acknowledgement (ACK') of the correction message (MC), the sending by the sending apparatus (AE), at the said other transmission speed (V2), of the message (M) to be transmitted with a request for acknowledgement (ACK) from the receiving apparatus (AR),
d) in the absence of an acknowledgement (ACK') of the correction message (MC), the sending by the sending apparatus (AE), at yet another transmission configuration (V3; G), of the message (M) to be transmitted with a request for acknowledgement (ACK) from the receiving apparatus (AR).

2. Process of correcting a message (M) to be transmitted between a sending apparatus (AE) and a receiving apparatus (AR) spaced out on a data transmission line (CP) of a mainspowered installation, the said line being the origin of perturbations liable to affect the transmission of the said message, and each apparatus (AE, AR) being able to send and receive data at at least two transmission speeds (V1, V2), the said correction process including the following steps:
a) the sending by the sending apparatus (AE), at a first transmission speed (V1), of the message (M) to be transmitted with a request for acknowledgement (ACK) from the receiving apparatus (AR),
b) in the absence of an acknowledgement (ACK) because of the said perturbations, the sending by the sending apparatus (AE), at another transmission speed (V2), of a correction message (MC) synchronous with the mains frequency, with a request for obligatory acknowledgement (ACK') from the receiving apparatus (AR), and containing data and a correction algorithm (AC) prepared by the sending apparatus (AE) by comparison between the bits sent and the bits actually transmitted over the line (CP), and then, the correction algorithm (AC) being different from the identity algorithm,
c) when there is an acknowledgement (ACK') of the correction message (MC), the sending by the sending apparatus (AE), at the said other transmission speed (V2), of the message (M) to be transmitted, synchronous with the mains frequency, with a request for acknowledgement (ACK) from the receiving apparatus (AR),
d) in the absence of acknowledgement (ACK') of the correction message (MC), the resending by the sending apparatus, at yet another transmission speed (V3), of a correction message synchronous with the mains frequency, with a request for obligatory acknowledgement from the receiving apparatus (AR), and containing other data and another correction algorithm prepared by the sending apparatus (AE) by comparison between the bits send and the bits actually transmitted over the line (CP), and then, if the said other correction algorithm is different from the identity algorithm, resumption of the process after step b), or, if the said other correction algorithm is equal to the identity algorithm, resumption of the process after step b) of the process according to Claim 1.

3. Correction process according to Claim 2, characterised in that, in the event of any doubt with regard to at least one received bit of the message (M) to be transmitted, the receiving apparatus (AR) effects a correction operation using the correction algorithm (AC) of the correction message previously received and acknowledged.

4. Correction process according to any one of Claims 1 to 3, characterised in that the said step d) is repeated until the acknowledgement (ACK) requested has been received by the sending apparatus (AE) or until a repetition counter is exhausted.
